(19) Europäisches Patentamt
European Patent Office
Office européen des brevets

(11) **EP 3 071 449 B1**

(12) **FASCICULE DE BREVET EUROPEEN**

(45) Date de publication et mention
de la délivrance du brevet:
**02.08.2017 Bulletin 2017/31**

(21) Numéro de dépôt: **14809943.5**

(22) Date de dépôt: **18.11.2014**

(51) Int Cl.:
*B60Q 1/26* (2006.01)     *B60Q 1/00* (2006.01)
*B60Q 1/30* (2006.01)     *B60Q 1/44* (2006.01)
*F21S 8/10* (2006.01)     *F21V 8/00* (2006.01)
*G02B 5/02* (2006.01)

(86) Numéro de dépôt international:
**PCT/FR2014/052956**

(87) Numéro de publication internationale:
**WO 2015/071620 (21.05.2015 Gazette 2015/20)**

(54) **SYSTÈME D'ÉCLAIRAGE ET/OU DE SIGNALISATION AVEC GUIDES DE LUMIERE POUR VEHICULE**

BELEUCHTUNGS- UND/ODER SIGNALISIERUNGSSYSTEM MIT LICHTLEITERN FÜR EIN FAHRZEUG

LIGHTING AND/OR SIGNALLING SYSTEM WITH LIGHT GUIDES FOR A VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.11.2013 FR 1361321**

(43) Date de publication de la demande:
**28.09.2016 Bulletin 2016/39**

(73) Titulaire: **AUTOMOTIVE LIGHTING REAR LAMPS FRANCE**
**89330 Saint-Julien-du-Sault (FR)**

(72) Inventeurs:
• **BUISSON, Alain**
**F-78190 Trappes (FR)**
• **SAMSON, Benoit**
**F-78190 Trappes (FR)**

(74) Mandataire: **Jacobacci Coralis Harle**
**32, rue de l'Arcade**
**75008 Paris (FR)**

(56) Documents cités:
EP-A2- 2 159 477     DE-A1-102004 054 732
DE-A1-102010 006 348     DE-A1-102010 046 342
DE-A1-102011 050 422     DE-A1-102011 118 219
FR-A1- 2 986 306

**EP 3 071 449 B1**

**Description**

La présente invention concerne le domaine de l'éclairage et en particulier de la signalisation, notamment pour les véhicules automobiles. Elle concerne plus particulièrement un dispositif d'éclairage ou de signalisation comportant au moins deux LED comme source lumineuse, et dans lequel la diffusion spatiale de la lumière émise par les LED est homogène et structurale.

La réglementation en vigueur impose, selon les types de véhicules, différents feux d'éclairage ou de signalisation. Mais, outre le volume de l'ensemble des feux, les performances et l'uniformité d'éclairement des feux individuels, éventuellement regroupés sont des préoccupations majeures.

On connaît des guides de lumière destinés à homogénéiser la lumière émanant d'une LED ou à créer des éclairages avec effets de style. Le document DE 10 2010 006 348 A1 décrit par exemple un feu arrière comprenant deux guides de lumière en plaque destinés à remplir deux fonctions de signalisation : feu de position et clignotant.

On connaît ainsi dans l'art antérieur des écrans auxiliaires transparents dans lesquels peut se propager la lumière émise par une source de lumière auxiliaire, ces écrans étant destinés à équiper un feu, notamment arrière, d'un véhicule automobile. Des discontinuités locales prévues dans le matériau de l'écran constituent des foyers de diffusion de la lumière hors de ces écrans (voir publication de brevet français No. FR 2 868 506).

Dans la demande de brevet allemand DE 101 01 795 sont décrits des feux clignotants, notamment des clignotants avant pour véhicules automobiles, dans lesquels une source de lumière auxiliaire pour feu de position illumine un élément disposé transversalement dans l'espace entre le feu principal et la glace frontale, et procure à travers celle-ci un éclairement de même direction que celle du feu principal.

Dans la demande de brevet français publiée sous le numéro FR 2 819 040, est décrit un composant d'optique ou de style pour l'éclairage ou la signalisation de véhicules automobiles. Ce composant est en matériau transparent, à l'intérieur duquel des foyers de diffusion de la lumière sont situés uniquement en des endroits prédéterminés pour diffuser la lumière émise par une source associée au dispositif d'éclairage ou de signalisation concerné. Ce composant peut constituer la glace d'un projecteur de véhicule automobile, ou un insert ayant sa place dans un tel projecteur.

Dans la demande de brevet allemand DE 103 11 317 est décrit un dispositif d'éclairage pour véhicule comportant un guide de lumière comprenant des structures de diffusion situées essentiellement au foyer de surfaces réfléchissantes qui laissent ainsi diffuser un éclairement homogène.

Par ailleurs, le document EP 0 936 403 décrit un dispositif d'éclairage pour véhicule à moteur, en particulier pour feux de signalisation, comportant un guide de lumière allongé et conçu pour augmenter l'intensité du faisceau lumineux sous un angle donné. Les éléments optiques ajoutés pour cela se situent dans l'axe du faisceau lumineux émis par la LED. Le système comporte en outre des éléments à pans biseautés, dont les portions correspondantes doivent être agencées pour éviter la déperdition de lumière en dehors de l'angle de vision dans lequel la concentration est souhaitée, pour un éclairement directif maximal.

Dans ces diverses applications et ces divers modes de réalisation d'écrans lumineux diffusant la lumière émise par au moins une LED, il peut apparaître des inhomogénéités dans la lumière diffusée, en particulier quand il s'agit de guides dont peuvent être munis les rideaux ou écrans diffuseurs.

Quant à l'éclairage direct par des LED de forte ou de moyenne puissance, il est désormais reconnu qu'il est aveuglant et ne devrait pas être généralisé sous cette forme.

A cet égard, la demanderesse a décrit dans le brevet FR2986306 publié le 02.08.2013, en prenant une autre approche, un dispositif d'éclairage à LED agencé pour procurer un système diffuseur contribuant à uniformiser le rendu lumineux d'un éclairage avantageusement multi-LED.

Il est cependant apparu utile de chercher à uniformiser et/ou à améliorer le rendu lumineux des dispositifs d'éclairage et de signalisation, et/ou à en masquer les éventuelles inhomogénéités, avec en option des effets de style, dans des conditions économiques et esthétiques avantageuses tout en préservant autant que faire se peut le rendement optique.

Afin d'atteindre ces objectifs l'invention concerne un dispositif d'éclairage pour feux de véhicule automobile, comprenant:

- au moins une première source de lumière à LED s'étendant selon une ligne et émettant de la lumière selon une première direction principale d'émission,

- un premier guide de lumière associé à la première source de lumière formé par une coque s'étendant, d'une part, selon la direction principale d'émission et, d'autre part, au droit de la source de lumière en suivant la ligne formée par cette dernière et comprenant une extrémité proximale de réception de la lumière orientée vers la source de lumière et à l'opposé de l'extrémité proximale une extrémité distale et entre les extrémités proximale et distale une face latérale d'émission de la lumière et, à l'opposé de la face latérale d'émission, une face latérale arrière comprenant des moyens de réflexion de la lumière vers la face latérale d'émission,

Selon l'invention, le dispositif d'éclairage comprend, entre l'extrémité proximale du premier guide de lumière et la première source de lumière, un manchon diffuseur comprenant un corps opaque délimitant un canal de diffusion rectiligne transparent dont la paroi périphérique est blanche et qui comprend une entrée en regard de la source de lumière et une sortie en regard de l'extrémité proximale du guide de lumière.

La mise en oeuvre d'un tel manchon diffuseur permet d'atténuer voire de supprimer la perception par un observateur des points « chauds » formés par les diodes allumées tout n'altérant pas trop le rendement lumineux du dispositif d'éclairage, c'est-à-dire en n'absorbant pas trop la lumière générée par la source de lumière. Le manchon diffuseur selon l'invention possède un effet « homogénéisateur » en ce qu'il homogénéise la lumière sortant du canal de diffusion.

Selon une caractéristique de l'invention, la paroi périphérique du canal de diffusion est rugueuse ou grainée. Cet état de surface de la paroi périphérique permet d'augmenter l'effet diffusant du canal.

Selon une autre caractéristique de l'invention, la paroi périphérique du canal de diffusion est brillante. Cette caractéristique permet de réduire les pertes d'énergie lumineuse dans le canal de diffusion.

Selon encore une autre caractéristique de l'invention, la paroi périphérique du canal de diffusion est mate. Cette caractéristique permet de réduire plus encore la perception des points chauds formés par les diodes.

Selon une caractéristique de l'invention, le canal de diffusion est rempli de gaz. Cette caractéristique permet de limiter les pertes lumineuses tout en autorisant un bilan de poids favorable.

Selon une variante de cette caractéristique, le canal de diffusion est ouvert au niveau de l'entrée. Ainsi, le gaz occupant le canal de diffusion est de l'air ce qui simplifie la conception et la fabrication du dispositif d'éclairage.

Selon une forme de réalisation, préférée mais non strictement nécessaire, de l'invention, la première source de lumière comprend au moins une série de diode électroluminescentes alignées, deux diodes consécutives de la série étant espacée d'un même pas d'espacement P.

Selon une variante de la forme préférée de réalisation, le pas d'espacement P est supérieur ou égal à 10 mm.

Selon une autre variante de la forme préférée de réalisation, le canal de diffusion possède une hauteur H, mesurée entre l'entrée et la sortie, qui vérifie la relation suivante :

$$H \geq a\, P \tan (C)$$

où :

- a est un coefficient supérieur ou égal à 1, de préférence supérieur ou égal à 2 et, de manière plus particulièrement préférée, compris entre 2 et 2,5
- P est le pas d'espacement des diodes,

- C est l'angle au sommet moyen des cônes d'éclairage en sortie des optiques primaires des diodes électroluminescentes,
- et tan la fonction tangente.

Selon l'invention, la première source de lumière n'est pas nécessairement réalisée sous la forme d'un alignement de diodes électroluminescentes. Ainsi, selon une autre forme de réalisation de l'invention, la première source de lumière comprend, d'une part, un guide de lumière primaire allongé et comprenant des moyens de diffusion latérale de la lumière et, d'autre part, au moins une diode électroluminescente disposée au niveau d'au moins d'une extrémité du guide de lumière primaire pour émettre de la lumière dans le guide de lumière primaire. La source de lumière ainsi réalisée émet de la lumière latéralement sur sensiblement toute la longueur du guide primaire.

Dans le cadre de cette forme de réalisation et selon une variante préférée mais non strictement nécessaire, le canal de diffusion du manchon diffuseur possède une hauteur H, mesurée entre l'entrée et la sortie, qui vérifie la relation suivante :

$$H \geq a'\, E$$

où :

- a' est un coefficient multiplicateur, supérieur ou égal à 2, de préférence, supérieur ou égal à 3 et de manière plus particulièrement préférée compris entre 3 et 4,
- E est l'épaisseur du guide primaire mesurée parallèlement à la direction d'émission $\Delta$.

Selon une caractéristique de l'invention, le manchon diffuseur comprend au niveau de la sortie du canal de diffusion un élément diffuseur travaillant en transmission. L'élément diffuseur peut être réalisé de toute manière appropriée. Ainsi, l'élément diffuseur peut comprendre un film comprenant des motifs imprimés au moyen d'encre diffusante. L'élément diffuseur peut aussi comprendre un film texturé imprimé ou non. L'élément diffuseur peut également être réalisé sous la forme d'une plaque transparente grainée ou texturée sur une ou deux faces. L'élément diffuseur peut aussi être réalisé dans un matériau translucide opalin blanc. Par ailleurs, il doit être noté que si l'élément diffuseur travaille en transmission, l'effet diffuseur du canal de diffusion résulte des réflexions des rayons lumineux sur la paroi périphérique du canal de diffusion.

Selon une caractéristique l'invention, le dispositif d'éclairage comprend en outre :

- au moins une deuxième source de lumière à LED s'étendant selon une ligne et émettant de la lumière selon une deuxième direction principale d'émission,

- un deuxième guide de lumière associé à la deuxième source de lumière formé par une coque étendant, d'une part, selon la deuxième direction principale d'émission et, d'autre part, au droit de la deuxième source de lumière en suivant la ligne formée par cette dernière et comprenant une extrémité proximale de réception de la lumière orientée vers la deuxième source de lumière et à l'opposé de l'extrémité proximale une extrémité distale et entre les extrémités proximale et distale une face latérale d'émission de la lumière et, à l'opposé de la face latérale d'émission, une face latérale arrière comprenant des moyens de réflexion de la lumière vers la face latérale d'émission,
- entre l'extrémité proximale du deuxième guide de lumière et la deuxième source de lumière, un élément collimateur.

La mise oeuvre d'une deuxième source de lumière et d'un deuxième guide de lumière permet de réaliser un deuxième type d'éclairage et de conférer une deuxième fonction au dispositif d'éclairage. Ainsi selon une variante de cette caractéristique :

- l'ensemble formé par la première source de lumière et le premier guide de lumière constitue une lanterne ou un feu arrière,
- et l'ensemble formé par la deuxième source de lumière et le deuxième guide de lumière constitue un feu stop ou un feu d'indication de changement de direction.

Selon une caractéristique de l'invention, l'épaisseur du premier ou deuxième guide de lumière diminue en direction de son extrémité distale.

Selon une autre caractéristique de l'invention, les moyens de réflexion de la lumière de chaque guide de lumière comprend des facettes et/ou des micro-stries aménagées dans la face arrière de chaque de guide de lumière.

Selon encore une autre caractéristique de l'invention, le dispositif d'éclairage comprend au moins un masque s'étendant au moins entre la source de lumière et l'extrémité proximale du guide de lumière correspondant du côté de la face d'émission de ce dernier.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

Par ailleurs, diverses autres caractéristiques de l'invention ressortent de la description annexée effectuée en référence aux dessins qui illustrent des formes non limitatives de réalisation d'un dispositif d'éclairage conforme à l'invention.

- Fig. 1 représente une vue en perspective schématique partiellement arrachée d'un dispositif d'éclairage selon l'invention.

- Fig. 2 représente une vue en perspective schématique d'une autre forme de réalisation de l'invention d'un dispositif d'éclairage selon l'invention.

Il est à noter que sur ces figures les éléments structurels et/ou fonctionnels communs aux différentes variantes peuvent présenter les mêmes références.

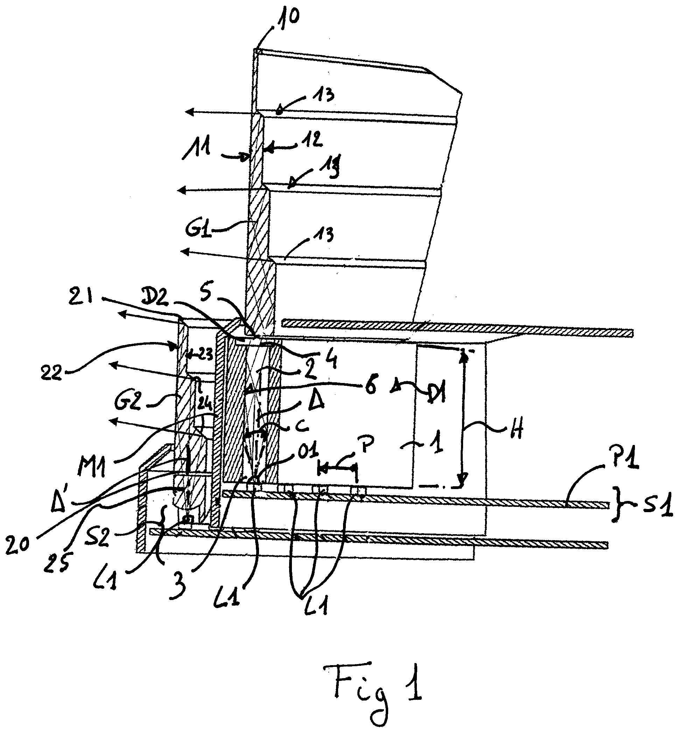

Un dispositif d'éclairage pour feux de véhicule selon l'invention, comporte au moins une source de lumière de lumière à diode électroluminescente ou Led associée à un guide de lumière. Selon l'exemple illustré à la figure 1, le dispositif d'éclairage comprend deux sources de lumière S1 et S2 chacune associée à un guide de lumière G1, respectivement G2.

Dans le cas présent, la première source de lumière S1, comprend une série de diodes électroluminescentes ou Led L1 alignées sur un support P1 en étant espacées de façon régulière. Ainsi, deux diodes consécutives L1 de la première source S1 sont séparées d'un pas P qui est, de préférence, supérieur ou égal à 10 mm de manière à éviter une surchauffe du support P1. Le support peut être réalisé de toute manière appropriée, selon l'exemple illustré il comprend un support de circuit imprimé ou PCB sur lequel sont agencées des pistes d'alimentation des diodes L1.

Les diodes L1 émettent de la lumière selon une direction principale d'émission Δ sensiblement perpendiculaire au support P1. Chaque diode L1 comprend une optique primaire 01 adaptée pour émettre la lumière selon un cône d'émission qui possède un angle au sommet C. L'ensemble des diodes L1 sont choisies de manière à présenter un même angle au sommet ou angle au sommet moyen C possédant, dans le cas présent, une valeur de 40°.

Le dispositif d'éclairage selon l'invention comprend, entre la première source de lumière S1 et le premier guide de lumière G1, un manchon diffuseur D1 qui comprend un corps opaque 1 à l'intérieur duquel est aménagé un canal 2 de diffusion rectiligne transparent dont une entrée 3 est située en regard de la première source de lumière L1 et une sortie 4 est située en regard d'une extrémité proximale 5 du premier guide de lumière G1. Le canal de diffusion 2 s'étend selon deux directions à savoir la ligne décrite par l'alignement des diodes L1 et la direction d'émission Δ. Le canal de diffusion possède une largeur ou épaisseur sensiblement égale à l'épaisseur du premier guide de lumière S1 et sa paroi périphérique 6 est sensiblement parallèle à la direction d'émission des diodes L1. La paroi périphérique 6 du canal de diffusion est de couleur blanche de manière que les rayons lumineux issus des diodes se réfléchissent sur ladite paroi périphérique. De manière préférée mais non strictement nécessaire, la paroi périphérique 6 est grainée ou rugueuse de manière à augmenter le caractère diffusant du canal 2 pour qu'en sortie du canal les points chauds formés par les diodes L1 soient peu ou pas perceptibles. Afin d'ajuster, l'effet diffusant il également possible de réalisée la paroi périphérique de manière qu'elle soit brillante ou au contraire mate.

Selon l'exemple illustré, le canal de diffusion 2 est creux en étant ouvert au niveau de son entrée de sorte qu'il est rempli d'air. Toutefois, selon l'invention, le canal de diffusion pourrait être fermé à ces deux extrémités en étant rempli d'un autre gaz que l'air. Le canal de diffusion 2 pourrait également être plein en étant rempli d'un matériau transparent.

Selon l'exemple de réalisation présenté, le canal de diffusion 2 est dimensionné de manière à optimiser son effet diffusant en optimisant le nombre de réflexion des rayons lumineux émis par les diodes L1 sur la paroi périphérique 6. A cet effet, la hauteur H du canal de diffusion 2, mesurée entre l'entrée et la sortie, vérifie la relation suivante :

$$H \geq a\,P\,\tan(C)$$

où :

- a est un coefficient multiplicateur,
- P est le pas d'espacement des diodes,
- C est l'angle au sommet moyen des cônes d'éclairage en sortie des optiques primaires des diodes électroluminescentes L1,
- et tan la fonction tangente.

De manière préférée, le coefficient a est choisi pour être supérieur ou égal à 1 et de préférence supérieur ou égal à 2. Dans la cas présent le coefficient est choisi pour être compris entre 2 et 2,5 et plus particulièrement avec une valeur égale à 2, valeur que les inventeurs ont identifiée comme offrant le meilleurs compromis entre l'effet diffusant atténuateur des points chaud et encombrement du manchon diffuseur 2.

Selon l'exemple de réalisation représenté à la figure 1, en complément de l'effet diffusant assuré par les réflexions successives sur la paroi périphérique ou latérale du canal de diffusion 2 le manchon diffuseur D1 comprend au niveau de sa sortie 4 un élément diffusant D2 travaillant en transmission et donc traversé par les rayons lumineux diffusés et guidés par le canal de diffusion 2.

Selon l'exemple illustré, l'élément diffuseur D2 comprend une plaquette transparente qui ferme le canal de diffusion 2 au niveau de sa sortie 4 et qui est grainée sur ces faces avant et arrière.

Le premier guide de lumière G1 associé à la première source de lumière S1 est réalisé de manière à former une sorte de rideau de lumière homogène lorsque la source de lumière est allumée. Ainsi le premier guide de lumière G1 se présente sous la forme d'une plaque ou d'une coque qui s'étend, d'une part, selon ou parallèlement à la direction d'émission de la lumière Δ et, d'autre part, au droit de la source de lumière S1 en suivant la ligne formée par cette dernière. Le guide de lumière comprend une extrémité proximale 5 d'entrée de la lumière et l'opposée de celle-ci une extrémité distale 10. Le premier guide de lumière G1 comprend, entre ses extrémités proximale 5 et distale 10, une face latérale ou avant 11 d'émission de la lumière et à l'opposée de la face avant 11 une face latérale arrière 12 comprenant des moyens 13 de réflexion ou de renvoi de la lumière vers la face avant 11.

Selon, l'exemple illustré les moyens de réflexion comprennent des facettes associées à une diminution en escalier de l'épaisseur du premier guide G1 en direction de son extrémité distale, l'épaisseur du guide G1 étant mesurée entre ses faces avant 11 et arrière 12.

Par ailleurs, selon l'exemple illustré, le dispositif d'éclairage comprend un masque M1 s'étendant au moins entre la première source de lumière S1 et l'extrémité proximale 5du premier guide de lumière G1 du côté de la face d'émission 11. Le masque M1 permet d'occulter toute lumière parasite qui pourrait être perçue par un observateur extérieur lors de l'allumage de la première source de lumière S1.

L'ensemble formé par la première source de lumière S1, le manchon diffuseur D1 et le premier guide de lumière permet d'obtenir lors de l'allumage de la première source S1 une illumination homogène de la face avant 11 du premier guide 1 sans point chaud ce qui est particulièrement adapté à la réalisation d'une lanterne ou d'un feu arrière.

Selon l'exemple illustré, le dispositif d'éclairage comprend un deuxième ensemble d'éclairage comprenant une deuxième source de lumière à Led S2 et un deuxième guide de lumière G2. Ce deuxième ensemble d'éclairage est destiné à former un feu stop ou un indicateur de changement de direction.

La deuxième source de lumière S2 s'étend selon une ligne et émet de la lumière selon une deuxième direction d'émission Δ' qui dans le cas présent est sensiblement parallèle à la direction d'émission Δ de la première source S1.

Le deuxième guide de lumière G2 présente ici une structure sensiblement analogue à celle du premier guide de lumière G1. Ainsi le deuxième guide de lumière G2 se présente sous la forme d'une plaque ou d'une coque qui s'étend, d'une part, selon la deuxième direction principale d'émission Δ' et, d'autre part, au droit de la deuxième source de lumière en suivant la ligne formée par cette dernière. Le deuxième guide de lumière G1 comprend alors une extrémité proximale 20 de réception de la lumière orientée vers la deuxième source de lumière S2 et à l'opposé de l'extrémité proximale une extrémité distale 21. Le deuxième guide de lumière G2 comprend entre les extrémités proximale 20 et distale 21 une face latérale ou avant 22 d'émission de la lumière et, à l'opposé de la face latérale d'émission 22, une face latérale arrière 23 comprenant des moyens 24 de réflexion de la lumière vers la face latérale d'émission 23.

Le deuxième ensemble d'éclairage comprend en outre un élément collimateur 35 interposé entre l'extrémité proximale 20 du deuxième guide de lumière G2 et la deuxième source de lumière S2 de manière à assurer une transmission au deuxième guide de lumière G2 de la majeur partie, voire de l'intégralité, de la lumière émise par la deuxième source de lumière S2.

Selon l'exemple illustré, les faces avant 11 et 20 des guides de lumière sont planes toutefois elles pourraient être incurvées en étant concave ou convexe.

De plus, les sources de lumière sont ici formées par des alignements de diodes sur des supports ou PCB. Toutefois, une source de lumière d'un dispositif selon l'invention n'est pas nécessairement réalisée de cette manière.

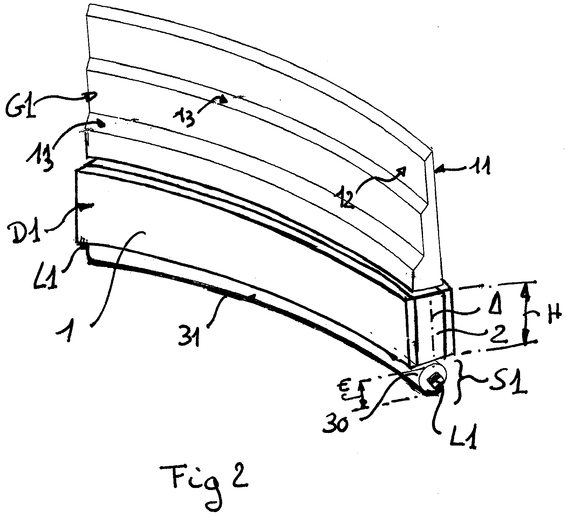

Ainsi la figure 2, illustre une variante de réalisation d'un dispositif d'éclairage conforme à l'invention, selon laquelle la première source de lumière S1 comprend un guide de lumière primaire 30 allongé s'étendant, dans le cas présent, selon une ligne incurvée. Le guide primaire 30 possède une section droite transversale sensiblement circulaire. Le guide primaire 30 possède, en outre, à l'opposé du premier guide de lumière G1 des moyens de diffusion latérale de la lumière réalisés sous la forme d'une surface de réflexion 31 à micro-prismes ou lentilles de Fresnel qui s'étend le long du guide primaire 30 en étant sensiblement orthogonale à la direction d'émission de la lumière Δ. La source de lumière S1 comprend en outre au moins une et, selon l'exemple illustré, deux diodes électroluminescentes L1 chacune disposées au niveau d'une extrémité du guide de lumière primaire 30 pour émettre de la lumière dans le guide de lumière primaire parallèlement à direction de la fibre moyenne dudit guide de lumière primaire 30.

Selon l'exemple de réalisation illustré figure 2, la première source de lumière S1 est, comme selon exemple de la figure 1, associé à un manchon diffuseur D1 et à un premier guide de lumière G1.

Selon cet exemple, le manchon diffuseur D1 ne comprend pas d'élément diffuseur et présente une hauteur H qui vérifie la relation suivante :

$$H \geq a' E$$

où :

- a' est un coefficient multiplicateur,
- E est l'épaisseur du guide primaire mesurée parallèlement à la direction d'émission Δ,

De manière préférée, le coefficient a' est choisi pour être supérieur ou égal à 2 et de préférence supérieur ou égal à 3. Dans la cas présent le coefficient est choisi pour être compris entre 3 et 4 et plus particulièrement avec une valeur égale à 3, valeur que les inventeurs ont identifiée comme offrant le meilleurs compromis entre l'effet diffusant atténuateur des points chaud et encombrement du manchon diffuseur 2 utilisé en association avec une source de lumière à guide de lumière primaire tel que décrit en relation avec la figure 2.

Il doit être noté que selon la variante de réalisation décrite en relation avec la figure 2, le dispositif d'éclairage ne comprend qu'un seul ensemble d'éclairage, celui intégrant la première source S1. Toutefois, il pourrait aussi comporter un deuxième ensemble d'éclairage analogue au deuxième ensemble d'éclairage décrit en relation avec la figure 1, voire un troisième ensemble d'éclairage qui pourrait être analogue au premier ou au deuxième ensemble d'éclairage.

Bien entendu, diverses autres variantes de réalisation d'un dispositif d'éclairage selon l'invention pourraient être envisagées dans le cadre des revendications annexées.

**Revendications**

1. Dispositif d'éclairage pour feux de véhicule, comprenant au moins:

   - une première source de lumière (S1) à LED s'étendant selon une ligne et émettant de la lumière selon une première direction principale d'émission (Δ),
   - un premier guide de lumière (G1) associé à la première source de lumière (S1) formé par une coque s'étendant, d'une part, selon la direction principale d'émission et, d'autre part, au droit de la source de lumière (S1) en suivant la ligne formée par cette dernière et comprenant une extrémité proximale (5) de réception de la lumière orientée vers la source de lumière et à l'opposé de l'extrémité proximale (5) une extrémité distale (10) et entre les extrémités proximale et distale une face latérale (11) d'émission de la lumière et, à l'opposé de la face latérale d'émission, une face latérale arrière (12) comprenant des moyens (13) de réflexion de la lumière vers la face latérale d'émission (11),

   **caractérisé en ce qu'**il comprend, entre l'extrémité proximale du premier guide de lumière et la première source de lumière, un manchon diffuseur (D1) comprenant un corps opaque (1) délimitant un canal de diffusion (2) rectiligne transparent dont la paroi périphérique (6) est blanche et qui comprend une entrée (3) en regard de la source de lumière et une sortie (4) en regard de l'extrémité proximale (5) du guide de lumière.

2. Dispositif d'éclairage selon la revendication précédente, **caractérisé en ce que** la paroi périphérique (6) du canal de diffusion (2) est rugueuse ou grainée.

**3.** Dispositif d'éclairage selon l'une des revendications précédentes, **caractérisé en ce que** la paroi périphérique (6) du canal de diffusion est brillante.

**4.** Dispositif d'éclairage selon la revendication 1 ou 2, **caractérisé en ce que** la paroi périphérique (6) du canal de diffusion est mate.

**5.** Dispositif d'éclairage selon l'une des revendications précédentes, **caractérisé en ce que** le canal de diffusion (2) est rempli de gaz.

**6.** Dispositif d'éclairage selon la revendication précédente, **caractérisé en ce que** le canal de diffusion (2) est ouvert au niveau de l'entrée (3).

**7.** Dispositif d'éclairage selon l'une des revendications précédentes, **caractérisé en ce que** la première source de lumière (S1) comprend au moins une série de diode électroluminescentes (L1) alignées, deux diodes consécutives de la série étant espacée d'un même pas d'espacement (P).

**8.** Dispositif d'éclairage selon la revendication précédente **caractérisé en ce que** le pas d'espacement (P) est supérieur ou égal à 10 mm.

**9.** Dispositif d'éclairage selon la revendication 8 ou 9, **caractérisé en ce que** le canal de diffusion (2) possède une hauteur H, mesurée entre l'entrée et la sortie, qui vérifie la relation suivante :

$$H \geq a\, P\, \tan(C)$$

où :

- a est un coefficient supérieur ou égal à 1, de préférence supérieur ou égal à 2 et, de manière plus particulièrement préférée, compris entre 2 et 2,5
- P est le pas d'espacement des diodes,
- C est l'angle au sommet moyen des cônes d'éclairage en sortie des optiques primaires des diodes électroluminescentes,
- et tan la fonction tangente.

**10.** Dispositif d'éclairage selon l'une des revendications 1 à 6, **caractérisé en ce que** :

- la première source de lumière comprend, d'une part, un guide de lumière primaire (30) allongé et comprenant des moyens (31) de diffusion latérale de la lumière et, d'autre part, au moins une diode électroluminescente disposée au niveau d'au moins d'une extrémité du guide de lumière primaire pour émettre de la lumière dans le guide de lumière primaire,
- et le canal de diffusion (2) du manchon diffuseur (D1) possède une hauteur H, mesurée entre l'entrée et la sortie, qui vérifie la relation suivante :

$$H \geq a'\, E$$

où :

- a' est un coefficient multiplicateur, supérieur ou égal à 2, de préférence, supérieur ou égal à 3 et de manière plus particulièrement préférée compris entre 3 et 4,
- E est l'épaisseur du guide primaire mesurée parallèlement à la direction d'émission $\Delta$.

**11.** Dispositif d'éclairage selon l'une des revendications précédentes, **caractérisé en ce que** le manchon diffuseur (D1) comprend au niveau de la sortie du canal de diffusion (2) un élément diffuseur (D2) travaillant en transmission.

**12.** Dispositif d'éclairage selon l'une des revendications précédentes, **caractérisé en ce qu'**il comprend :

- au moins une deuxième source de lumière à LED (S2) s'étendant selon une ligne et émettant de la lumière selon une deuxième direction principale d'émission ($\Delta$'),
- un deuxième guide de lumière (G2) associé à la deuxième source de lumière (S2) formé par une coque s'étendant, d'une part, selon la deuxième direction principale d'émission et, d'autre part, au droit de la deuxième source de lumière (S2) en suivant la ligne formée par cette dernière et comprenant une extrémité proximale de réception de la lumière orientée vers la deuxième source de lumière et à l'opposé de l'extrémité proximale une extrémité distale et entre les extrémités proximale et distale une face latérale d'émission de la lumière et, à l'opposé de la face latérale d'émission, une face latérale arrière comprenant des moyens de réflexion de la lumière vers la face latérale d'émission,
- entre l'extrémité proximale du deuxième guide de lumière et la deuxième source de lumière, un élément collimateur (25).

**13.** Dispositif d'éclairage selon la revendication précédente, **caractérisé en ce que** :

- l'ensemble formé par la première source de lumière (S1) et le premier guide de lumière (G1) constitue une lanterne ou un feu arrière,

- et l'ensemble formé par la deuxième source de lumière (S2) et le deuxième guide de lumière (G2) constitue un feu stop ou un feu d'indication de changement de direction.

14. Dispositif d'éclairage selon l'une des revendications précédentes, **caractérisé en ce que** l'épaisseur de chaque guide de lumière diminue en direction de son extrémité distale.

15. Dispositif d'éclairage selon l'une des revendications précédentes, **caractérisé en ce que** les moyens (13, 24) de réflexion de la lumière de chaque guide de lumière comprend des facettes et/ou des micro-stries aménagées dans la face arrière de chaque de guide de lumière.


**Patentansprüche**

1. Beleuchtungsvorrichtung für Fahrzeugleuchten, die wenigstens

     - eine erste Lichtquelle (S1) mit Leuchtdioden, die sich entlang einer Linie erstrecken und Licht in einer ersten Hauptausstrahlungsrichtung ($\Delta$) ausstrahlen,
     - einen der ersten Lichtquelle (S1) zugeordneten ersten Lichtleiter (G1), der aus einer Schale gebildet ist, die sich einerseits in der Hauptausstrahlungsrichtung und andererseits senkrecht zur Lichtquelle (S1) erstreckt und der Linie folgt, die durch letztere gebildet ist, und die ein zur Lichtquelle hin gerichtetes proximales Ende (5) zur Aufnahme des Lichts und am zum proximalen Ende (5) entgegengesetzten Ende ein distales Ende (10) und zwischen dem proximalen und dem distalen Ende eine seitliche Fläche (11) zum Ausstrahlen des Lichts und, zur Licht ausstrahlenden Fläche entgegengesetzt, eine Mittel (13) zum Reflektieren des Lichts zur seitlichen Ausstralalungsfläche (11) aufweisende hintere seitliche Fläche (12) aufweist,

     aufweist,
     **dadurch gekennzeichnet, daß** sie zwischen dem proximalen Ende des ersten Lichtleiters und der ersten Lichtquelle eine Streuhülse (D1) aufweist, die einen lichtundurchlässigen Körper (1) aufweist, der einen geraden durchsichtigen Streukanal (2) begrenzt, dessen Umfangswandung (6) weiß ist, und der einen Eingang (3) gegenüber der Lichtquelle und einen Ausgang (4) gegenüber dem proximalen Ende (5) des Lichtleiters aufweist.

2. Beleuchtungsvorrichtung gemäß dem vorangehenden Anspruch, **dadurch gekennzeichnet, daß** die Umfangswandung (6) des Streukanals (2) rau oder körnig ist.

3. Beleuchtungsvorrichtung gemäß einem der vorangehenden Ansprüche, **dadurch gekennzeichnet, daß** die Umfangswandung (6) des Streukanals glänzend ist.

4. Beleuchtungsvorrichtung gemäß Anspruch 1 oder 2 **dadurch gekennzeichnet, daß** die Umfangswandung (6) des Streukanals matt ist.

5. Beleuchtungsvorrichtung gemäß einem der vorangehenden Ansprüche, **dadurch gekennzeichnet, daß** der Streukanal (2) mit Gas gefüllt ist.

6. Beleuchtungsvorrichtung gemäß dem vorangehenden Anspruch, **dadurch gekennzeichnet, daß** der Streukanal (2) am Eingang (3) offen ist.

7. Beleuchtungsvorrichtung gemäß einem der vorangehenden Ansprüche, **dadurch gekennzeichnet, daß** die erste Lichtquelle (S1) wenigstens eine Reihe ausgerichteter Leuchtdioden (L1) aufweist, wobei zwei aufeinander folgende Dioden der Reihe in einem gleichen Abstand (P) voneinander sind.

8. Beleuchtungsvorrichtung gemäß dem vorangehenden Anspruch, **dadurch gekennzeichnet, daß** der Abstand (P) größer als oder gleich 10 mm ist.

9. Beleuchtungsvorrichtung gemäß Anspruch 7 oder 8, **dadurch gekennzeichnet, daß** der Streukanal (2) eine zwischen dem Eingang und dem Ausgang gemessene Höhe H aufweist, die folgende Beziehung erfüllt:

$$H \geq a\, P \tan(C),$$

wobei

     - a ein Koeffizient größer als oder gleich 1, vorzugsweise größer als oder gleich 2 ist und in besonders bevorzugter Weise zwischen 2 und 2,5 beträgt,
     - P der Abstand der Dioden ist,
     - C der mittlere Spitzenwinkel der Lichtkegel am Ausgang der Primäroptiken der Leuchtdioden ist und
     - tan die Tangensfunktion bezeichnet.

10. Beleuchtungsvorrichtung gemäß einem der Ansprüche 1 bis 6, **dadurch gekennzeichnet, daß**

     die erste Lichtquelle einerseits einen Mittel (31) für eine seitliche Streuung des Lichts aufweisenden länglichen primären Lichtleiter (30) und andererseits wenigstens eine an wenigstens einem Ende des primären Lichtleiters angeordnete Leuchtdiode zum Einbringen des Lichts in den primären Lichtleiter aufweist und daß der Streukanal (2) der Streuhülse (D1) eine zwischen dem Eingang und dem Ausgang gemessene Höhe H aufweist, die folgende Beziehung erfüllt:

$$H \geq a' \, E,$$

wobei

- a ein Multiplikationskoeffizient größer als oder gleich 2, vorzugsweise größer als oder gleich 3 ist und in besonders bevorzugter Weise zwischen 3 und 4 beträgt,
- E die parallel zur Ausstrahlungsrichtung ($\Delta$) gemessene Dicke des primären Leiters ist.

11. Beleuchtungsvorrichtung gemäß einem der vorangehenden Ansprüche, **dadurch gekennzeichnet, daß** die Streuhülse (D1) im Bereich des Ausgangs des Streukanals (2) ein im Übertragungsbetrieb arbeitendes Streuelement (D2) aufweist.

12. Beleuchtungsvorrichtung gemäß einem der vorangehenden Ansprüche, **dadurch gekennzeichnet, daß** es:

- wenigstens eine zweite Lichtquelle (S2) mit Leuchtdioden, die sich entlang einer Linie erstrecken und Licht in einer zweiten Hauptausstrahlungsrichtung ($\Delta'$) ausstrahlen,
- einen der zweiten Lichtquelle (S2) zugeordneten zweiten Lichtleiter (G2), der aus einer Schale gebildet ist, die sich einerseits in der zweiten Hauptausstrahlungsrichtung und andererseits senkrecht zur zweiten Lichtquelle (S2) erstreckt und der Linie folgt, die durch letztere gebildet ist, und die ein zur zweiten Lichtquelle hin gerichtetes proximales Ende zur Aufnahme des Lichts und am zum proximalen Ende entgegengesetzten Ende ein distales Ende und zwischen dem proximalen und dem distalen Ende eine seitliche Fläche zum Ausstrahlen des Lichts und, zur Licht ausstrahlenden Fläche entgegengesetzt, eine Mittel zum Reflektieren des Lichts zur seitlichen Ausstrahlungsfläche aufweisende hintere seitliche Fläche aufweist,
- zwischen dem proximalen Ende des zweiten Lichtleiters und der zweiten Lichtquelle einen Kollimator (25)

aufweist.

13. Beleuchtungsvorrichtung gemäß dem vorangehenden Anspruch, **dadurch gekennzeichnet, daß**

- die aus der ersten Lichtquelle (S1) und dem ersten Lichtleiter (G1) gebildete Einheit eine Positionsleuchte oder eine Schlußleuchte bildet und
- die aus der zweiten Lichtquelle (S2) und dem zweiten Lichtleiter (G2) gebildete Einheit eine Bremsleuchte oder eine Richtungsänderungsanzeigeleuchte bildet.

14. Beleuchtungsvorrichtung gemäß einem der vorangehenden Ansprüche, **dadurch gekennzeichnet, daß** sich die Dicke jedes Lichtleiters zum distalen Ende hin verringert.

15. Beleuchtungsvorrichtung gemäß einem der vorangehenden Ansprüche, **dadurch gekennzeichnet, daß** die Mittel (13, 24) zum Reflektieren des Lichts jedes Lichtleiters auf der Rückseite jedes Lichtleiters angeordnete Facetten und/oder Mikroriefen aufweisen.

**Claims**

1. A lighting device for vehicle lights, comprising at least:

- a first LED light source (S1) extending along a line and emitting light in a first main direction of emission ($\Delta$),
- a first light guide (G1) associated with the first light source (S1) formed by a shell extending, on the one hand, in the main direction of emission and, on the other hand, perpendicular to the light source (S1) following the line formed by the latter and comprising a proximal end (5) for light reception, directed towards the light source and, opposite the proximal end (5), a distal end (10) and, between the proximal and distal ends, a lateral face (11) of light emission and, opposite the lateral face of emission, a rear lateral face (12) comprising means (13) for reflecting the light towards the lateral face of emission (11),

**characterized in that** it comprises, between the proximal end of the first light guide and the first light source, a scattering sleeve (D1) comprising an opaque body (1) delimiting a transparent rectilinear scattering channel (2) whose peripheral wall (6) is white and that comprises an inlet (3) opposite the light source and an outlet (4) opposite the proximal end (5) of the light guide.

2. The lighting device according to the preceding claim, **characterized in that** the peripheral wall (6) of the scattering channel (2) is rough or grainy.

3. The lighting device according to one of the preceding claims, **characterized in that** the peripheral wall (6) of the scattering channel (2) is bright.

4. The lighting device according to claim 1 or 2, **characterized in that** the peripheral wall (6) of the scattering channel (2) is matt.

5. The lighting device according to one of the preceding claims, **characterized in that** the scattering channel (2) is filled with gas.

6. The lighting device according to the preceding claims, **characterized in that** the scattering channel (2) is open at the inlet (3).

7. The lighting device according to one of the preceding claims, **characterized in that** the first light source (S1) comprises at least a series of electroluminescent diodes (L1) aligned with each other, two consecutive diodes of the series being spaced by a same spacing pitch (P).

8. The lighting device according to the preceding claim, **characterized in that** the spacing pitch (P) is higher than or equal to 10 mm.

9. The lighting device according to claim 8 or 9, **characterized in that** the scattering channel (2) has a height H, measured between the inlet and the outlet, that satisfies the following relation:

$$H \geq a \, P \, \tan(C)$$

where:

   - a is a coefficient higher than or equal to 1, preferably higher than or equal to 2, and more particularly preferably comprised between 2 and 2.5,
   - P is the diode spacing pitch,
   - C is the average apex angle of the lighting cones at the exit of the primary optics of the electroluminescent diodes,
   - and tan is the tangent function.

10. The lighting device according to one of claims 1 to 6, **characterized in that**:

   - the first light source comprises, on the one hand, a primary light guide (30) of elongated shape and comprising the lateral light scattering means (31) and, on the other hand, at least one electroluminescent diode arranged at least one end of the primary light guide to emit the light into the primary light guide,
   - and the scattering channel (2) of the scattering sleeve (D1) has a height H, measured between the inlet and the outlet, that satisfies the following relation:

$$H \geq a' \, E$$

where:

   - a' is a multiplication coefficient, higher than or equal to 2, preferably, higher than or equal to 3, and more particularly preferably, comprised between 3 and 4,
   - E is the thickness of the primary guide measured parallel to the direction of emission $\Delta$.

11. The lighting device according to one of the preceding claims, **characterized in that** the scattering sleeve (D1) comprises, at the outlet of the scattering channel (2), a scattering element (D2) working in transmission.

12. The lighting device according to one of the preceding claims, **characterized in that** it comprises:

   - at least one second LED light source (S2) extending along a line and emitting light in a second main direction of emission ($\Delta'$),
   - a second light guide (G2) associated with the second light source (S2) formed by a shell extending, on the one hand, in the second main direction of emission and, on the other hand, perpendicular to the second light source (S2) following the line formed by the latter and comprising a proximal end for light reception, directed towards the second light source and, opposite the proximal end, a distal end and, between the proximal and distal ends, a lateral face of light emission and, opposite the lateral face of emission, a rear lateral face comprising means for reflecting the light towards the lateral face of emission,
   - between the proximal end of the second light guide and the second light source, a collimator element (25).

13. The lighting device according to the preceding claim, **characterized in that**:

   - the unit formed by the first light source (S1) and the first light guide (G1) constitutes a lantern or a rear light,

- and the unit formed by the second light source (S2) and the second light guide (G2) constitutes a stop light or a direction indicator light.

14. The lighting device according to one of the preceding claims, **characterized in that** the thickness of each light guide reduces towards its distal end.

15. The lighting device according to one of the preceding claims, **characterized in that** the light reflecting means (13, 24) of each light guide comprise facets and/or micro-lines formed in the rear face of each light guide.

Fig 1

Fig 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102010006348 A1
- FR 2868506
- DE 10101795
- FR 2819040
- DE 10311317
- EP 0936403 A
- FR 2986306
- FR 02082013